# EUROPÄISCHE PATENTSCHRIFT

(11) **EP 1 915 324 B1**
(45) Veröffentlichungstag und Bekanntmachung des Hinweises auf die Patenterteilung: **08.07.2009**
(21) Anmeldenummer: 06776686.5
(22) Anmeldetag: 09.08.2006
(51) Int. Cl.: C03C 17/34, C03C 23/00, B41M 5/26

(54) **LASERMARKIERUNG NAHE DER OBERFLÄCHE BEI INNENBEARBEITETEN TRANSPARENTEN KÖRPERN**
LASER MARK FORMED INSIDE TRANSPARENT BODIES NEAR THE SURFACE
REPERE LASER PRATIQUE DANS DES CORPS USINES A L'INTERIEUR, A PROXIMITE DE LA SURFACE

(30) Priorität: 18.08.2005 DE 102005039430
(43) Veröffentlichungstag der Anmeldung: 30.04.2008
(73) Patentinhaber: Oerlikon Trading AG, Trübbach, 9477 Trübbach (CH)
(72) Erfinder: SMOLE, Philipp, 9710 Feistritz Drau (AT); LANKER, Michael, CH-8808 Pfäffikon (CH); HEINE-KEMPKENS, Claus, CH-7304 Maienfeld (CH)
(74) Vertreter: Kempkens, Anke
(86) Internationale Anmeldenummer: PCT/EP2006/007851
(87) Internationale Veröffentlichungsnummer: WO 2007/019991

(56) Entgegenhaltungen:
- WO-A-00/32531
- WO-A-92/03297
- WO-A-95/25639
- WO-A-98/12055
- DE-A1- 4 022 745

## Beschreibung

### Technisches Gebiet

Die vorliegende Erfindung betrifft ein Verfahren zur Erzeugung einer unter der Oberfläche liegende Markierung in einem transparenten Körper. Die vorliegende Erfindung betrifft insbesondere ein Verfahren zur Markierung eines mit einem Schichtsystem versehenen transparenten Körpers.

### Bekannter Stand der Technik

Für die Zwecke der vorliegenden Erfindung wird der Begriff Glas ganz allgemein als einen transparenter Körper bezeichnend angesehen. Als transparent für eine Wellenlänge des Lichtes ist in diesem Zusammenhang ein Körper anzusehen, wenn die Eindringtiefe der Strahlung mindestens 1/10 der Wellenlänge beträgt.

Die Innenbearbeitung von Glas mit Laserstrahlen ist bekannt. Im Laser Magazin 1/95 Seiten 16ff wird beispielsweise ein Verfahren beschrieben, bei dem Laserstrahlen eines Nd:YAG-Lasers verwendet werden, um eine Innenbearbeitung von Glas zu erzielen. Durch eine geeignete Strahlformung wird dabei sichergestellt, daß die Strahlungsintensität auf der Glasoberfläche weit unterhalb der Zerstörschwelle liegt. Erst im Inneren des Glasbauteils führt die Fokussierung zu Intensitäten oberhalb der Zerstörschwelle. Die Wechselwirkung verursacht eine lokale Aufschmelzung mit Rißbildung, die von außen makroskopisch sichtbar ist. Zur Behandlung wurde Nd:YAG-Laserstrahlung bei einer Wellenlänge von λ = 1.064µm verwendet. Diese Strahlung führt bei sehr hohen Intensitäten >1 GW/cm2 in Glas aufgrund nichtlinearer optischer Effekte zu einer Selbstfokussierung und letztlich zu einer anomalen Absorption, welche sich als Aufschmelzbereich im Glas bemerkbar macht. Im Artikel wird beschrieben, dass bei Quarzglas in Bezug auf die minimale Ausdehnung des Aufschmelzbereiches die besten Ergebnisse erzielt werden, wobei ca. 100µm erreicht werden. Diese Ergebnisse werden gemäß Artikel allerdings lediglich mit Substraten erzielt deren Glasaußenfläche eine hohe Oberflächenqualität aufweisen. Im Laser Magazin wird beschrieben, dass bereits kleinste Verunreinigungen sowie Oberflächenrauheiten an der Oberfläche zu einer erheblichen Herabsetzung der Intensitätsschwelle für die Zerstörung führen und somit bereits eine unerwünschte Wechselwirkung auf der Oberfläche verursachen. Für handelsübliches Silikatglas seien die Ergebnisse einerseits weniger reproduzierbar und führten zu weiter ausgedehnten Bearbeitungszonen. Beim Glasmaterial SF6 wird beobachtet, dass es bereits auf der Glasoberfläche zur Strahlabsorption kommt.

Im Laser Magazin wird zwar die Ausdehnung der Bearbeitungszonen diskutiert. In welcher Glastiefe diese Bearbeitungszone angesiedelt werden konnte, wird aber nicht angesprochen. Aus Aufnahmen ist ersichtlich dass es sich um dicke Substrate (>1mm) gehandelt hat. Im Text wird von einer Materialstärke des Quarzglases von 20mm berichtet. Insbesondere das Auftreten einer ausgedehnten Selbstfokussierungsspur sowie Störzonen nach der eigentlichen Behandlungszone (vgl. Bild 3) deuten auf einen gestörten Bereich hin, der weit über 1mm liegt. Eine Markierung von Gläsern, deren Dicke unterhalb 1mm liegt kommt daher nicht in Frage.

Auch aus EP 0543899 ist ein Verfahren zur Erzeugung einer Markierung in einem Glaskörper bekannt, bei dem die Strahlung eines Nd:YAG-Lasers bei 1.064µm verwendet wurde.

Nachteilig bei dem bekannten Verfahren ist dabei, dass auch hier eine Veränderung des Glases über den eigentlichen Fokusbereich der Laserstrahlung hinaus stattfindet. Dies hängt damit zusammen, daß diese durch eine lokale Aufschmelzung des Glases erklärbare bläschenartige Veränderung schlagartig, quasi explosionsartig, eintritt. Daraus resultiert die Notwendigkeit, daß die Markierung, die durch eine Aneinanderreihung dieser Markierungspunkte erzeugt wird, einen gewissen Mindestabstand von der Oberfläche des Glaskörpers aufweisen muß. Bei dem Verfahren gemäß EP 0543899 beträgt der Mindestabstand einer Markierung in einem Glaskörper von der Oberfläche etwa 1 mm, so daß der Glaskörper zur Vermeidung von Bruchgefahr insgesamt eine Dicke von mindestens 3 mm besitzen muss. In der Praxis mussen aber häufig Glasplatten markiert werden, deren Dicke selbst lediglich 1 mm beträgt.

In EP 1051365 wird ein Verfahren angegeben demgemäß es möglich ist Glasplatten unterhalb der Oberfläche zu markieren die lediglich 1 mm dick sind. Die Markierung kann erfolgen, ohne dass die Markierungen sich zur Oberfläche fortpflanzen. Dies wird dadurch erzielt, dass für die Markierung eine Wellenlänge gewählt wird, für die das zu markierende Substrat bereits absorbierend ist. Vorzugsweise sollte der Transmissionsgrad zwischen 60% und 95% des Plateauniveaus liegen. Als Plateauniveau wird der Transmissionsgrad desjenigen Wellenlängenbereichs bezeichnet, bei dem die Absorption minimal ist. Dies hat den Vorteil dass die Zerstörschwelle im Glasmaterial selbst so weit herabgesetzt ist, dass relativ kleine Intensitäten verwendet werden können und damit eventuelle Verschmutzungen der Oberfläche oder Oberflächenrauheiten keine Rolle mehr spielen. Ausserdem ist die Begrenzung des Plateaus bei den Gläsern, unabhängig von ihrem Reinheitsgrad, recht gut reproduzierbar festgelegt, so dass auch bei standardmäßigem Glas reproduzierbare Ergebnisse erzielt werden können.

Problematisch bei dieser Lösung ist allerdings, dass die Wellenlänge dem jeweiligen Substratmaterial angepasst werden muss, da verschiedene Gläser verschiedene Plateauniveaus besitzen. Beispielsweise wird das Verfahren wirtschaftlich unrentabel, wenn Quarzgläser markiert werden müssen, da diese selbst im UV-Bereich noch sehr hohe Transmission zeigen. Bei Nicht-Quarzgläsern ist ein weiterer nachteiliger Aspekt in der Tatsache begründet, dass in EP 1051365 UV-Licht eingesetzt wird. Die endliche Eindringtiefe von UV Licht (bedingt durch Absorption) in den Glaskörper beschränkt die Bearbeitungstiefe. Soll daher durch das Substrat hindurch knapp unterhalb der Oberfläche markiert werden, so ist hierfür das in EP 1051365 aufgezeigte Verfahren nicht geeignet.

Zudem sind die zu dem Aufbau notwendigen Optiken und Laser in der Regel teuer. Das Verfahren wird sehr schnell unwirtschaftlich.

### Technische Aufgabenstellung

Der Erfindung liegt daher die Aufgabe zugrunde, eine Möglichkeit aufzuzeigen wie Glas mittels Laserstrahlen mit im Plateaubereich der Transmissionskurve des Glases liegender Wellenlänge oberflächennah innenbearbeitet werden kann, ohne dabei die Oberfläche zu modifizieren. Die Lösung entsprechend der vorliegenden Erfindung sollte ohne eine besonders reine Glasart oder besondere Anforderungen an die Oberflächenqualität der Glasoberfläche auskommen.

Ein weiterer Aspekt der vorliegenden Erfindung bezieht sich auf das Auslesen der Markierungen. Markierungen die dicht unterhalb der Oberfläche des Glases liegen zeichnen sich häufig durch relativ schwachen Kontrast von markierten Stellen im Vergleich zu nicht markierten Stellen aus. Auslesevorrichtungen erkennen häufig diese Markierungen nicht oder falsch. Es wäre daher wirtschaftlich ein Vorteil wenn einfache Maßnahmen zu Verringerung der Anzahl Auslesefehler gefunden würden.

### Lösungsweg

Die Lösung gemäß der vorliegenden Erfindung liegt darin, die Oberfläche des zu bearbeitenden Glases mit einem dielektrischen Dünnfilm-Schichtsystem, das mindestens eine Schicht umfasst, zu bedecken.

Dem Fachmann ist bekannt dass Dünnfilm-Schichtsysteme in der Regel an der Glasoberfläche, die sie bedecken, Spannungen erzeugen. Die beispielsweise durch Vakuum-Beschichtungsverfahren aufgebrachten Schichten weisen Spannungen auf, deren Kräfte auf das darunter liegende Substrat wirksam werden. Daher würde der Fachmann erwarten, dass die Gefahr, dass die eigentlich unter der Oberfläche zu platzierende Markierung bis zur Grenzfläche Substrat-Beschichtung und dann bis zur Oberfläche durchbricht, bei einem beschichteten Substrat jedenfalls teilweise noch größer ist als ohne Beschichtung.

Es ist zu beachten, dass eine solche Beschichtung typischerweise maximal einige wenige µm Gesamtdicke umfasst. In der Regel ist eine solche Beschichtung auf weniger als 5µm Gesamtdicke beschränkt. Da die Beschichtung teuer ist, ist es von Vorteil Beschichtungen von unter 3µm zu verwenden.

Wie die Erfinder jedoch festgestellt haben, macht die Beschichtung der Oberfläche den Prozess reproduzierbarer und trägt dazu bei, dass keine Durchbrüche zur Oberfläche auftreten, auch wenn die Markierungen sehr nah unterhalb der Oberfläche platziert sind. Eine mögliche Erklärung für diesen unerwarteten Effekt könnte sein, dass die Mängel der Oberflächenqualität durch die Beschichtung neutralisiert werden. Weist die äußerste Schicht des Schichtsystems beispielsweise eine im Vergleich zur Glasoberfläche erhöhte Zerstörschwelle auf, so haben eventuelle Verschmutzungen oder Unebenheiten nicht den Effekt, die Zerstörschwelle unterhalb die Zerstörschwelle des zu markierenden Glassubstrates zu drücken. An der äußeren Oberfläche des beschichteten Substrates werden daher keine Zerstörungen sichtbar. Allerdings ist der Ursprung dieses Schutzeffektes noch nicht sicher geklärt. Die erfinderische Maßnahme führt aber erstmals zu beschichteten Substraten mit Innenbearbeitung deren Bearbeitungsbereiche weniger als 500µm und sogar weniger als 250µm von derjenigen Grenzfläche entfernt sind, die das Glassubstrat mit der ersten Schicht bildet und dies ohne dass die Bearbeitungsbereiche an die Oberfläche reichen.

Damit können erstmals Glassubstrate die eine Dicke von weniger als 1mm haben effizient und wirtschaftlich unterhalb der Oberfläche markiert werden.

Die Möglichkeit, dünne mit einem Vielschichtsystem beschichtete Glasplatten knapp unterhalb der Oberfläche im Glassubstrat zu markieren liefert zudem den Vorteil, dass durch die Markierungsart keine Splitter, Partikel, Anschmelzugen oder Ausbrüche an der Oberfläche entstehen. Insbesondere bei so genannten "low-defect"-Komponenten spielt die Defektfreiheit der Oberfläche für die weitere Prozessierung beschichteter Substrate eine wichtige Rolle.

Ein weiterer Aspekt der vorliegenden Erfindung bezieht sich auf das Auslesen der Markierung. Dadurch dass es nun möglich ist die Markierungstiefe auf wenige 100µm unterhalb der Oberfläche zu begrenzen wird die Ausleseoptik stark vereinfacht. Es muss nun zum Auslesen nicht mehr eine tief im Substrat liegende Ebene abgebildet werden, sondern es genügt Optiken zu verwenden, die es lediglich erlauben Ebenen knapp unterhalb der Oberfläche abzubilden. Auch auf Substratseite ist der Vorteil vorhanden, dass nun nicht mehr Licht tief in Substrat eindringen muss. Daher werden mit dem vorliegenden erfinderischen Verfahren Substrate aus Materialien markierbar, die einen relativ geringen Transmissionsgrad (beispielsweise mit k>0.01 und insbesondere k>0.08 und sogar k>0.1, wobei k der Imaginärteil des komplexen Brechungsindex ist) aufweisen.

Experimente haben allerdings gezeigt, dass die so knapp unterhalb der Oberfläche markierten Substrate zu einem Signalkontrast führen der deutlich schlechter ist als bei Substraten deren Markierung beispielsweise > 300µm im Substrat liegt. Wie die Erfinder herausfanden, lässt sich aber eine erhebliche Kontrasterhöhung dann erzielen, wenn die Oberfläche des Substrates mit einen Dünnschichtsystem, das eine Antireflexbeschichtung bildet, beschichtet wird. Es wird vermutet, dass bei unbeschichteter Oberfläche ein Teil des zum Auslesen verwendeten Lichtes direkt an der Grenzfläche, die die Oberfläche bildet, reflektiert wird und das eigentliche Signal überlagert und damit stört. In dem Fall, wo die Markierung tief ins Substrat eingebracht ist, vermag die herkömmliche Ausleseoptik das von der Oberfläche reflektierte Signal zu ignorieren. Da aber hier die Markierung nahe an der Oberfläche liegt, kann das Signal nicht mehr so einfach von der Oberflächenreflexion getrennt werden. Mittels der Antireflexbeschichtung wird die Reflexion der Oberfläche reduziert. Damit wird der Kontrast im Auslesesignal erheblich gesteigert. Die Erfindung beinhaltet daher ein unterhalb der Oberfläche markiertes Substrat, das Mittel zur Reduktion des direkt an der Oberfläche reflektierten Ausleselichtes umfasst.

Erfinderisch ist also das Verfahren zum Markieren von transparenten Substraten unterhalb der Oberfläche, wobei das Verfahren folgende Schritte umfasst
- Bereitstellen eines Substrates
- Markieren des Substrates mittels unterhalb der Oberfläche fokussiertem sichtbaren Licht
wobei vor dem Markieren mittels sichtbarem Licht das Substrat mit einem Schichtsystem, das mindestens eine dielektrische Schicht umfasst beschichtet wird, wobei die Zerstörschwelle des Schichtmaterials unter Bestrahlung mit dem für die Markierung zu verwendendem Lichtes oberhalb der Zerstörschwelle des Substratmaterials liegt.

Erreicht werden kann, dass die Markierung weniger als 500µm, vorzugsweise weniger als 350µm von der an das Substrat grenzenden Grenzfläche des Schichtsystems entfernt ist, ohne dass es zur Schädigung der Oberfläche kommt.

Vorteilhaft für das Auslesen ist, wenn das Schichtsystem als Antireflexschicht für eine zum Auslesen der Markierung geeignete Wellenlänge wirksam ausgebildet wird.

In einem solchen Verfahren kann zusätzlich eine Erhöhung der lateralen projezierten Pixeldichte erreicht werden, wenn die Markierungen in zwei unterschiedlichen Tiefen geschrieben werden wobei der Tiefenunterschied in der Größenordnung der lateralen Pixeldichte liegt.

Bildet man das Schichtsystem als für das zur Markierung verwendete Licht als Spiegel aus und wird die Markierung mittels Reflexion an dem durch das Substrat hindurch beaufschlagten Schichtsystem durchgeführt so erreicht man in den sich überlappenden Bereichen eine erhöhte Intensität.

Gleichzeitig kann wiederum das das Schichtsystem so ausgebildet werden, dass es für eine zum Auslesen geeignete Wellenlänge zumindest teilweise transmissiv ist.

Es entsteht ein Substrat mit Markierung unterhalb der Oberfläche und einem dielektrischen Schichtsystem, das mindestens eine dielektrische Schicht umfasst, wobei die Markierung im Substrat lediglich 500µm von der Grenzfläche liegt, die das dielektrischen Schichtsystem mit dem Substrat bildet, ohne zur Grenzfläche fortgesetzt zu sein.

Vorteilhaft ist, wenn das Material des Schichtsystems für mindestens eine zur Markierung geeignete Wellenlänge im sichtbaren Bereich eine gegenüber dem Substratmaterial erhöhte Zerstörschwelle besitzt.

Für das Auslesen von Vorteil ist, wenn dass das Schichtsystem für mindestens eine zum Auslesen der Markierung geeignete Wellenlänge als reflexvermindernde Schicht ausgebildet ist.

Ein Substrat mit oben beschriebener Markierung und dem Schichtsystem, das für eine zur Markierung geeignete Wellenlänge als Spiegelschicht ausgebildet ist, ist Teil der Erfindung.

Es wird nun im Folgenden die Erfindung anhand von Beispielen genauer beschrieben und im Detail erläutert.

Im ersten Beispiel wird ein Borofloat Glas mit einer vierschichtigen Antireflexbeschichtung belegt. Borofloat Glas hat einen Brechungsindex von 1.52. Es wurde mittels eines PVD-Verfahrens (physical vapor deposition) folgendes Schichtsystem aufgebracht:

| | Brechungsindex | Dicke [nm] |
|---|---|---|
| Luft | 1 | - |
| Schicht 4 | 1.38 | 114.673913 |
| Schicht 3 | 1.905 | 83.0708661 |
| Schicht 2 | 1.76 | 89.9147727 |
| Schicht 1 | 1.38 | 229.347826 |
| Glas | 1.52 | - |

Anschliessend wurde die Innenbearbeitung des Substrates mit einem frequenz-verdoppelten Nd:YAG-Laser vorgenommen, d.h. die für die Markierung verwendete Laserwellenlänge betrug an Luft 532 nm.

Die Verwendung von sichtbarem Licht, d.h. von Licht im Wellenlängenbereich von 420nm bis 780nm, hat im Vergleich zu den im Stand der Technik gewählten Wellenlängen erhebliche Vorteile:
Verwendet man 1064 nm, also das Licht eines nicht Frequenz verdoppelten ND:YAG-Lasers, so ist ein wesentlicher Beitrag zum Schädigungsmechanismus (Pixel) das thermische Aufschmelzen der Glasoberfläche resp. der Innenseite welches zum "Einschusskanal" führt. Thermische Effekte haben zur Folge, dass die Pixel deutlich grösser werden, da mehr Energie im Vergleich zu 532 nm verwendet werden muss, um Intensitäten oberhalb der Schwelle zu erzeugen und diese nicht schnell genug vom dielektrischen Körper transportiert werden kann. (Absorption beschränkt die Eindringtiefe des fokussierten Strahls)
Im UV Bereich ist der wesentliche Schädigungseffekt die Laserablation, also Stossionisation der Atome. Durch den relativ hohen Absorptionskoeffizienten (bis zu 20 %) einiger industrieller Gläser in diesem Bereich eignet sich dieses Verfahren nur bedingt, um einerseits tiefe Markierungen, andererseits unterschiedliche Glastypen zu verwenden. (Absorption beschränkt die Eindringtiefe des fokussierten Strahls)

Bei 532 nm kommt eine Kombination des thermischen Aufschmelzens und Laserablation als pixelerzeugender Effekt zum tragen. Daher können beliebig kleine Pixel abhängig von der Fokussierung der Linse in einem wesentlich höheren Tiefenbereich (nahe der Glasoberfläche (beschränkt bei 1064nm) und tief innerhalb des Glasses (beschränkt im UV Bereich durch die Absorption)) erzeugt werden. Die Pixelgrösse ist im Wesentlichen von der Energie und Fokussierung des Strahls, nicht aber von den Materialeigenschaften (transmissive optische Eigenschaften vorausgesetzt) abhängig.

Außerdem ist es viel einfacher, den Laserstrahl zu justieren da dieser sichtbar ist. Die Justage kann bei geringerer Intensität vollzogen werden, um die Augen der justierenden Person zu schützen.

Mit diesem System wurden Buchstaben mittels Pixelschreibweise geschrieben. Einzelne Pixel hatten eine Distanz zueinander von 100µm. Die vertikale Ausdehnung der gemessenen Pixel beträgt 80-100µm. Die horizontale Ausdehnung der gemessenen Pixel beträgt ca. 20-50 µm.
Der Abstand zur Oberfläche betrug 300µm. Es wurden keine Durchbrüche zur Oberfläche festgestellt.

Bei dem Verfahren hat sich herausgestellt, dass durch die AR (Antireflexionsschicht) mit geringeren Intensitäten dasselbe Ergebnis (Pixelgrösse) erzielt werden kann. Der Effekt beruht vermutlich darauf, dass die Reflexion des Laserlichts an der Grenzfläche Beschichtung/Luft bzw. Glas/Beschichtung reduziert wurde.

In einem zweiten Versuch ging es darum, die horizontale Pixeldichte zu erhöhen, ohne dass dabei Risse entstehen sollten, die die einzelnen Pixel verbinden. Experimente haben ergeben, dass eine einfache Reduktion der Distanz zweier Pixel genau zu solchen verbindenden Rissen führt. Dabei wird die Gefahr sehr groß, dass ein solcher, die Pixel verbindender Riss sich fortpflanzt und schließlich bis zur Oberfläche gelangt.

Das Problem der schadlosen Erhöhung der Pixeldichte wurde von den Erfindern dadurch gelöst, dass sie, obwohl lediglich eine plane Struktur (numerische und alphanumerische Zeichen) benötigt wurde eine zweite Ebene von Pixel geschrieben haben, wobei das horizontale Zentrum der Pixel der zweiten Ebene in den Zwischenraum der Pixel der ersten Ebene gelegt wurde. Die beiden Ebenen haben einen Abstand von lediglich 150µm. Dadurch entsteht dem Betrachter der Eindruck einer erhöhten Pixeldichte und das Kontrastverhältnis wird deutlich erhöht.

In einem dritten Beispiel soll das Substrat von der Rückseite aus knapp unterhalb der Oberfläche beschrieben werden. Das Substrat habe im Beispiel einen Brechungsindex von n = 1.52. Für die Polarisation des Lasers wird die p-Polarisation gewählt und als Einfallswinkel werden 57° gewählt, was in etwa dem Brewster Winkel entspricht. Damit ist gewährleistet, dass lediglich sehr wenig von der Rückseite des Glassubstrates beim Eintritt des Laserstrahls reflektiert wird. Im Glas propagiert das Licht dann gemäß dem Gesetz von Snellius mit einem Winkel von 38°.

Die Vorderseite des Substrates sei mit einem Multischichtsystem versehen, welches unter 38° Licht im Wesentlichen grünes Licht, zumindest aber Licht der Wellenlänge die der des zum markieren verwendeten Wellenlänge entspricht zumindest teilweise reflektiert. Vorzugsweise wird sämtliches zum Schreiben verwendetes Licht reflektiert. Im Beispiel wird die frequenz-verdoppelte Strahlung eines Nd:YAG-Lasers mit einer Wellenlänge von 532 nm verwendet.

Während des Schreibvorgangs entsteht nun aufgrund der Reflexion knapp unterhalb der Oberfläche der beschichteten Seite des Glassubstrates ein Überlagerungsbereich, in dem sich einfallendes Licht und reflektiertes Licht überlagern und ein Interferenzmuster bilden. Wird die Laserenergie so eingestellt, dass die Intensität im einfachen Strahl deutlich unterhalb der Zerstörschwelle liegt, im Überlagerungsbereich es jedoch Stellen gibt, bei denen die Intensität oberhalb der Zerstörschwelle liegt, so findet eine Markierung statt, die auf den Überlagerungsbereich begrenzt ist. Dieser Effekt wird dadurch unterstützt, dass im Überlagerungsbereich so genannte Interferenzstreifen mit vierfacher Intensität aufgebaut werden.

Das zuvor genannte Multischichtsystem wird, falls möglich, vorzugsweise so gewählt, dass es für das zum Auslesen verwendete Licht als Antireflexbeschichtung wirkt. Im Beispiel soll mittels einer blauen LED unter 0° ausgelesen werden.

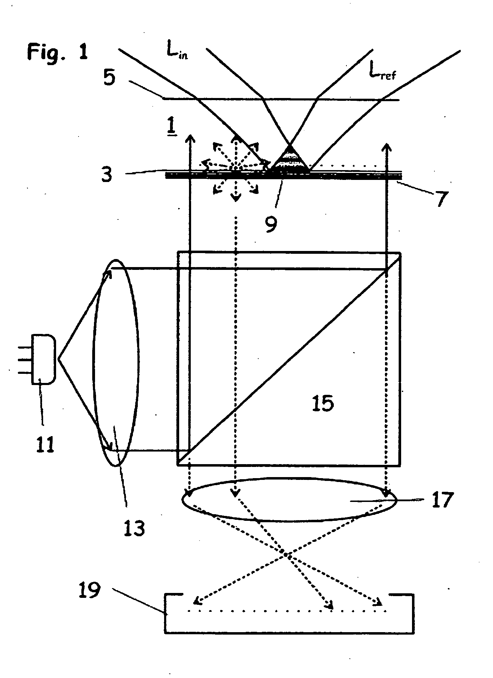

In Figur 1 ist die Situation schematisch dargestellt. Gezeigt ist das Substrat 1 mit Vorderseite 3 und Rückseite 5. Die Vorderseite 3 ist mit dem dielektrischen Schichtsystem 7 beschichtet. Der durch die Rückseite 5 einfallende Schreibstrahl Lin wird am Schichtsystem 7 der Vorderseite 3 im Substrat 1 reflektiert und tritt als reflektierter Schreibstrahl Lref durch die Rückseite 5 aus dem Substrat 1 aus. Im Überlappungsbereich 9 in dem sich einfallender Schreibstrahl Lin und reflektierter Schreibstrahl Lref überlappen bildet sich aufgrund der Kohärenz der als Schreibstrahl verwendeten Laserstrahlung ein Interferenzmuster mit den charakteristischen Interferenzstreifen aus, in denen es zu Bäuchen hoher Intensität kommt. Die Pixel der Markierung sind im Substrat 1 mittels einer Punktlinie angedeutet.

Zum Auslesen wird das Licht einer blauen LED 11 mittels einer ersten Linse 13 kollimiert und über einen Strahlteiler 15 auf das auszulesende markierte Substrat 1 gerichtet. Das Schichtsystem 7 wirkt unter 0° Beaufschlagung von blauem Licht als AR-Beschichtung. Das Licht erreicht somit die Markierungen und wird teilweise an diesen zurück zum Strahlteiler 15 gestreut. Beispielhaft ist an einem Pixel das gestreute Licht schematisch mit gestrichelten Pfeilen dargestellt. Das zurückgestreute Licht transmittiert den Strahlteiler 15 teilweise. Mittels einer zweiten Linse 17 wird somit die Markierungsebene im Detektor 19 abgebildet.

## Patentansprüche

1. Verfahren zum Markieren von transparenten Substraten unterhalb der Oberfläche, wobei das Verfahren folgende Schritte umfasst
- Bereitstellen eines Substrates
- Markieren des Substrates mittels unterhalb der Oberfläche fokussiertem sichtbaren Licht
**dadurch gekennzeichnet, dass**
- vor dem Markieren mittels sichtbarem Licht das Substrat mit einen Schichtsystem, das mindestens eine dielektrische Schicht umfasst, beschichtet wird, wobei die Zerstörschwelle des Schichtmaterials unter Bestrahlung mit dem für die Markierung zu verwendenden Lichtes oberhalb der Zerstörschwelle des Substratmaterials liegt.

2. Verfahren nach Anspruch 1, **dadurch gekennzeichnet, dass** die Markierung weniger als 500µm, vorzugsweise weniger als 350µm von der an das Substrat grenzenden Grenzfläche des Schichtsystems entfernt ist.

3. Verfahren nach einem der vorhergehenden Ansprüche, **dadurch gekennzeichnet, dass** das Schichtsystem als Antireflexschicht für eine zum Auslesen der Markierung geeignete Wellenlänge wirksam ausgebildet wird.

4. Verfahren nach einem der vorangehenden Ansprüche, **dadurch gekennzeichnet, dass** zur Erhöhung der lateralen projezierten Pixeldichte die Markierungen in zwei unterschiedlichen Tiefen geschrieben werden, wobei der Tiefenunterschied in der Größenordnung der lateralen Pixeldichte liegt.

5. Verfahren nach einem der vorangehenden Ansprüche, **dadurch gekennzeichnet, dass** das Schichtsystem als für das zur Markierung verwendete Licht als Spiegel ausgebildet wird und die Markierung mittels Reflexion an dem durch das Substrat hindurch beaufschlagte Schichtsystem durchgeführt wird.

6. Verfahren nach Anspruch 5 **dadurch gekennzeichnet dass** das Schichtsystem für eine zum Auslesen geeignete Wellenlänge zumindest teilweise transmissiv ausgebildet wird.

7. Transparentes Substrat mit Markierung unterhalb der Oberfläche und einem dielektrischen Schichtsystem das mindestens eine dielektrische Schicht umfasst, **dadurch gekennzeichnet dass** die Markierung im Substrat lediglich 500µm von der Grenzfläche das das dielektrischen Schichtsystem mit dem Substrat bildet liegt, ohne zur Grenzfläche fortgesetzt zu sein.

8. Substrat nach Anspruch 7 **dadurch gekennzeichnet, dass** das Material des Schichtsystems für mindestens eine zur Markierung geeignete Wellenlänge im sichtbaren Bereich eine gegenüber dem Substratmaterial erhöhte Zerstörschwelle besitzt.

9. Substrat nach einem der Ansprüche 7 und 8, **dadurch gekennzeichnet, dass** das Schichtsystem für mindestens eine zum Auslesen der Markierung geeignete Wellenlänge als reflexvermindernde Schicht ausgebildet ist.

10. Substrat nach einem der Ansprüche 7 bis 9 **dadurch gekennzeichnet dass** das Schichtsystem für die zur Markierung geeignete Wellenlänge als Spiegelschicht ausgebildet ist.

## Claims

1. Method for marking transparent substrates below the surface, wherein the method comprises the following steps:
- preparation of a substrate
- marking of the substrate by means of visible light focussed below the surface,
**characterised in that**
- before marking by means of visible light, the substrate is coated with a layer system comprising at least one dielectric layer, wherein the destruction threshold of the layer material under radiation with the light to be used for marking lies above the destruction threshold of the substrate material.

2. Method according to claim 1, **characterised in that** the marking is less than 500 µm, preferably less than 350 µm, from the interface of the layer system bordering the substrate.

3. Method according to any of the preceding claims, **characterised in that** the layer system is formed effective as an antireflection layer for a wavelength suitable for reading the marking.

4. Method according to any of the preceding claims, **characterised in that** to increase the lateral projected pixel density, the markings are written at two different depths, wherein the depth difference lies in the order of magnitude of the lateral pixel depth.

5. Method according to any of the preceding claims, **characterised in that** the layer system is formed as a mirror for the light used for marking, and the marking is performed by means of reflection at the layer system irradiated through the substrate.

6. Method according to claim 5, **characterised in that** the layer system is formed at least partly transmissive for a wavelength suitable for reading.

7. Transparent substrate with marking below the surface and a dielectric layer system which comprises at least one dielectric layer, **characterised in that** the marking in the substrate lies only 500 µm from the interface formed by the dielectric layer system with the substrate, without extending to the interface.

8. Substrate according to claim 7, **characterised in that** the material of the layer system has a higher destruction threshold than the substrate material for at least one wavelength suitable for marking in the visible range.

9. Substrate according to any of claims 7 and 8, **characterised in that** the layer system is formed as a reflection-reducing layer for at least one wavelength suitable for reading the marking.

10. Substrate according to any of claims 7 to 9, **characterised in that** the layer system is formed as a mirror layer for the wavelength suitable for marking.

## Revendications

1. Procédé destiné à pratiquer un repère sur des substrats transparents au-dessous de la surface, le procédé comportant les étapes suivantes consistant à :
- mettre à disposition un substrat
- pratiquer un repère sur le substrat au moyen d'une lumière visible focalisée au-dessous de la surface
**caractérisé en ce que**
- avant de pratiquer le repère au moyen d'une lumière visible, le substrat est revêtu d'un système de couche, qui comporte au moins une couche diélectrique, le seuil d'endommagement du matériau de couche subissant irradié par la lumière à utiliser pour pratiquer le repère étant supérieur au seuil d'endommagement du matériau de substrat.

2. Procédé selon la revendication 1, **caractérisé en ce que** le repère est éloigné de moins de 500 µm, de préférence de moins de 350 µm de la surface limite du système de couche adjacente au substrat.

3. Procédé selon l'une quelconque des revendications précédentes, **caractérisé en ce que** le système de couche est conçu de manière à agir comme une couche antireflets pour une longueur d'onde se prêtant à la lecture du repère.

4. Procédé selon l'une quelconque des revendications précédentes, **caractérisé en ce que** pour augmenter la densité de pixel projetée latérale, les repères sont inscrits en deux profondeurs différentes, la différence de profondeur étant de l'ordre de la densité de pixel latérale.

5. Procédé selon l'une quelconque des revendications précédentes, **caractérisé en ce que** le système de couche est conçu comme un miroir pour la lumière utilisée pour pratiquer le repère et la pratique du repère est réalisée au moyen d'une réflexion sur le système de couche injecté à travers le substrat.

6. Procédé selon la revendication 5 **caractérisé en ce que** le système de couche est conçu de manière à transmettre au moins en partie une longueur d'onde se prêtant à la lecture.

7. Substrat transparent comprenant un repère au-dessous de la surface et un système de couche diélectrique qui comporte au moins une couche diélectrique, **caractérisé en ce que** le repère dans le substrat ne se situe qu'à 500 µm de la surface limite, que le système de couche diélectrique forme avec le substrat, sans être prolongé en direction de la surface limite.

8. Substrat selon la revendication 7 **caractérisé en ce que** le matériau du système de couche pour au moins une longueur d'onde se prêtant à la pratique d'un repère possède dans le spectre visible un seuil d'endommagement accrû par rapport au matériau de substrat.

9. Substrat selon l'une quelconque des revendications 7 et 8, **caractérisé en ce que** le système de couche est conçu comme une couche diminuant la réflexion pour au moins une longueur d'onde se prêtant à la lecture du repère.

10. Substrat selon l'une quelconque des revendications 7 à 9 **caractérisé en ce que** le système de couche est conçu comme une couche miroir pour la longueur d'onde se prêtant à la pratique du repère.
